# EUROPEAN PATENT APPLICATION

(11) **EP 4 169 422 A1**
(43) Date of publication of application: **26.04.2023**
(21) Application number: 21203905.1
(22) Date of filing: 21.10.2021
(51) Int. Cl.: A47J 31/46, A47J 31/54

(54) **DEVICE FOR STORING AND DISPENSING A HEATED LIQUID AND METHOD FOR OPERATING SUCH A DEVICE**

(71) Applicant: BRITA SE, 65232 Taunusstein (DE)
(72) Inventor: HENSEL, Matthias, 63452 Hanau (DE); DI BARI, Daniele, 55218 Ingelheim am Rhein (DE); MAIER, Ralph, 61476 Kronberg (DE); MACHUI, Oliver, 61352 Bad Homburg (DE)

(57) **Abstract**

A device (1) for storing and dispensing a heated liquid (10) comprises an unpressurized hot liquid tank (2) and a dispensing conduit (3) that runs from the hot liquid tank (2) towards a dispensing unit (4). The device (1) also comprises a pumping device (11) for conveying the heated liquid (10) from the hot liquid tank (2) through the dispensing conduit (3) towards the dispensing unit (4). A backflow preventer (14) that is arranged along the dispensing conduit (3) at a pressure side (13) of the pumping device (11) prevents any liquid to flow backwards through the dispensing conduit (3) towards the pumping device (11) while the pumping device (11) is not operated to convey heated liquid (10) towards the dispensing unit (4). The device (1) also comprises a bypass line (16) that branches off from the dispensing conduit (3) at the pressure side (13) of the pumping device (11) and that opens into an upper region (18) within the hot liquid tank (2) that is not filled with the liquid (10). The bypass line (16) provides an opening of the dispensing conduit (3) through which pressure balancing with the environment is enabled, which allows for a pressure balancing of the liquid column at the pressure side (13) of the pumping device (11) with the liquid column at the intake side (12) of the pumping device (11) after operation of the pumping device (11) is stopped.

## Description

### Technical Field

The invention relates to a device for storing and dispensing a heated liquid comprising an unpressurized hot liquid tank, whereby the hot liquid tank comprises a heating element for heating the liquid that is stored within the hot liquid tank, and whereby the hot liquid tank further comprises a compensation opening through which pressure balancing with the environment is enabled, the device further comprising a dispensing conduit that runs from the hot liquid tank towards a dispensing unit, the device also comprising a pumping device for conveying the heated liquid from the hot liquid tank through the dispensing conduit towards the dispensing unit, and the dispensing conduit comprising a backflow preventer that is arranged along the dispensing conduit at a pressure side of the pumping device and at distance to the pumping device, whereby the backflow preventer prevents any liquid to flow backwards through the dispensing conduit towards the pumping device while the pumping device is not operated to convey heated liquid towards the dispensing unit.

### Background of the invention

Many different embodiments of such devices for storing and dispensing a heated liquid exist. These devices are known for and used for providing hot and cold water for human consumption as well as for domestic use, e.g. for body care, for cleaning purposes or in kitchens. With common boilers that provide hot or cold water, a dispensing unit is connected to a hot liquid tank as well as to a cold water supply, whereby the dispensing unit provides control elements for mixing and dispensing hot water provided from the hot liquid tank and cold water provided from the cold water supply. Similar or other embodiments of such devices form an integral part of apparatuses that dispense hot or cold beverages after and according to a corresponding selection made by a user.

For many purposes and applications, it is considered advantageous for the hot liquid tank to be unpressurized, i.e. to comprise a compensation opening that provides for a fluidical connection to the environment. Thus, the pressure within the hot liquid tank equals the atmospheric pressure within the surrounding environment, which allows for a simple and cost-effective design and manufacture of the hot liquid tank as well as for a safe and reliable operation of the device during a long service life of the device. However, as the hot liquid tank is usually located below a dispensing unit with a dispensing opening, neither a pressure gradient nor the gravitational force can be used for causing the heated liquid to flow from the hot liquid tank into the dispensing unit and out of a dispensing outlet that is controlled by or located within the dispensing unit.

Thus, during operation of the device the liquid from the hot liquid tank, usually heated water, is pumped with the help of a pumping device from the hot liquid tank towards the dispensing unit. By activating the dispensing unit, namely by operating the dispensing unit to dispense heated water from the hot liquid tank, the pumping device is operated to pump heated water from the heated liquid tank through the dispensing conduit into the dispensing unit until the heated water is dispensed from a dispensing outlet of the dispensing unit into e.g. a cup or glass or any other container that is positioned below a dispensing outlet.

The dispensing conduit can be designed to completely run outside of the hot liquid tank. In order to save heat energy and to avoid a premature cooling of the liquid which is in the dispensing conduit before being dispensed through the dispensing unit, the dispensing unit runs along a section or predominantly within the hot liquid tank and only exits the hot liquid tank before running into the dispensing unit that is usually arranged outside the hot liquid tank. Thus, at least the section of the dispensing conduit that runs within the hot liquid tank is heated by the heating element and the hot liquid within the hot liquid tank.

However, the heating of the liquid within the hot liquid tank causes some degassing of the heated liquid within the hot liquid tank, but also within the dispensing conduit. Furthermore, additional activities like filtering or descaling the heated liquid may also contribute to a gas uptake within the heated liquid. An additional source of gas uptake can be the pumping device that is used for pumping the heated liquid through the dispensing conduit towards the dispensing unit. Such gas will be predominantly air from the environment and air dissolved within the liquid that is filled into the hot liquid tank. Any residual gas and in particular any residual air that remains within the dispensing conduit after the termination of an operation of the pumping device may interfere with a subsequent operation of the pumping device. However, appropriate venting of the dispensing conduit is usually prevented by a backflow preventer that is arranged along the dispensing conduit at the pressure side of the pumping device between the pumping device and the dispensing unit. Such a backflow preventer is considered mandatory for devices that also feed cold water or unheated liquid to the dispensing unit that might flow in an opposite direction through the dispensing conduit, i.e. from the dispensing unit towards the pumping device and the hot liquid tank.

Unfortunately, such a backflow preventer not only prevents a cold liquid to enter into the dispensing conduit and to backflow towards the pumping device, but also prevents appropriate venting of the dispensing conduit to allow any residual gas within the pressurized side to escape from the dispensing conduit. Thus, residual gas accumulates within the dispensing unit and might interfere with the operation of the pumping device and thus with the operation of the device for dispensing hot or mixed liquid through the dispensing unit that at least in part comes from the hot liquid tank.

Accordingly, there is a need for a device as described above to reduce or to get rid of any residual gas that remains within the dispensing conduit after each termination of the operation of the pumping device during a user activated dispense of heated liquid from the hot liquid tank.

### Summary of the invention

The present invention relates to a device for storing and dispensing a heated liquid as described above, whereby the device also comprises a bypass line that branches off from the dispensing conduit at the pressure side of the pumping device and that opens into an upper region within the hot liquid tank that is not filled with the liquid, thereby providing an opening of the dispensing conduit through which pressure balancing with the environment is enabled, which allows for a pressure balancing of the liquid column at the pressure side of the pumping device with the liquid column at the intake side of the pumping device after operation of the pumping device is stopped. It has been found that by providing such an opening of the dispensing conduit at the pressure side of the pumping device, the resulting pressure balancing of the liquid columns at each side of the pumping device that takes place causes most of the remaining gas to escape from the dispensing conduit, either by escaping through the bypass line into the hot liquid tank or by moving backwards through the intake side of the dispensing conduit back to the hot liquid tank. All residual gas that escapes the dispensing conduit will not contribute to any interference with the pumping device. Thus, the operation of the pumping device will be more reliable and more efficient due to the additional opening of the dispensing unit that is provided by the bypass line.

During operation of the pumping device, the heated liquid will be pumped along the pressure side section of the dispensing conduit and thus will be also pumped into the bypass line that branches from the dispensing conduit. However, due to the opening of the bypass line that opens into the hot liquid tank any heated liquid that flows through the bypass line will be returned into the hot liquid tank and will not be wasted or dispensed into the environment. Thus, making use of such a bypass line that branches off from the pressure side of the dispensing conduit and that runs back into the hot liquid tank allows for a safe and efficient operation of the device without any additional efforts or limitations for a user. The return of the heated liquid that runs through the bypass line into the hot liquid tank ensures that no heated liquid that has been pumped through the dispensing conduit is wasted or must be collected in a separate container.

Depending on the arrangement and course of the dispensing conduit, the liquid that remains within the dispensing conduit will not be heated by the heating element within the hot liquid tank but will be the first amount of liquid that will be transferred through the dispensing conduit to the dispensing unit. Furthermore, the return flow of at least some heated liquid that has been pumped towards the dispensing unit but not yet dispensed through the dispensing outlet reduces the amount of heated liquid that cools down before the next use of the device, i.e. before a subsequent operation of the pumping device pumps heated water through the dispensing conduit towards the dispensing unit.

Thus, the opening within the dispensing conduit that is formed by the bypass line that opens into an upper region within the hot liquid tank allows for a pressure balancing and for a significant reduction of the residual gas that remains within the dispensing conduit after each termination of the operation of the pumping device, and also enhances the user-friendliness by providing better heated liquid more quickly to the dispensing unit. Such a device can be used e.g. as hot water boiler within a household or a building, the heated liquid being heated water that can be used for human consumption or sanitary purposes.

According to an embodiment of the invention, the bypass branch is located outside of the hot liquid tank and above a top of the hot liquid tank. It is possible to arrange for the bypass branch next to the backflow preventer that is usually located outside the hot liquid tank at the pressure side of the dispensing conduit between the pumping device and the dispensing unit. The backflow preventer prevents any unwanted intake into the dispensing conduit and subsequent backflow of other liquid like e.g. cool water that can also be dispensed with the dispensing unit. However, the backflow preventer also prevents any backflow of heated liquid that has been pumped through the dispensing conduit towards the dispensing unit, but not yet passed the backflow preventer. Thus, after termination of the operation of the pumping device, a liquid column remains trapped within the dispensing conduit that extends from the backflow preventer downwards. The nearer the bypass branch is located towards the backflow preventer, the less amount of heated liquid remains trapped within said section of the dispensing conduit between the bypass branch and the backflow preventer.

Optionally, the bypass line runs through the compensation opening of the hot water tank. This allows for an easy and cost-effective mounting of the bypass line that runs into the hot liquid tank. As an already existing compensation opening is used for the introduction of the bypass line into the hot liquid tank, no additional opening is necessary that would require additional sealing means. By using the already existing compensation opening, the additional bypass line does not affect the safety and reliability of operation of the device.

It is also possible to retrofit the bypass line to already existing and used devices with an unpressured hot liquid tank. Due to the arrangement of the bypass branch outside the hot liquid tank in combination with the introduction of the bypass line through the already existing compensation opening into the hot liquid tank, the efforts that are required for retrofitting the bypass line can be minimized. It is not necessary to remove or open the hot liquid tank in order to provide for the opening within the dispensing conduit that results in the more reliable and more efficient operation of the pumping device as well as in the increased user-friendliness.

In yet another embodiment of the invention, a section of the dispensing conduit at the pressure side of the pumping device runs through the hot liquid tank, and the bypass branch is located inside of the hot liquid tank and near a top of the hot liquid tank. The dispensing conduit running through the hot liquid tank brings several advantages. The heated liquid that has been pumped into the dispensing conduit but not dispensed by the dispensing outlet is kept within the hot liquid tank and will be heated together with the liquid that remains within the hot liquid tank or that is refilled into the hot liquid tank after a previous operation of the pumping device. Furthermore, any leakage along the section of the dispensing conduit that runs through the hot liquid tank remains within the hot liquid tank and does not leak into the environment. By arranging the bypass branch inside of the hot liquid tank, the heated liquid that flows through the bypass line out of the dispensing conduit does not leave the hot liquid tank, which significantly reduces any risk of unwanted leakage e.g. at the bypass branch or along the bypass line. Furthermore, there is no additional space requirement for the device, as the additional bypass line is fully integrated within the hot liquid tank. As the bypass line opens into the upper region within the hot liquid tank that is not filled with liquid during normal operation of the hot liquid tank, the bypass line does not decrease the usable volume for storing and heating liquid within the hot liquid tank.

As the bypass line forms an opening of the dispensing conduit, during operation of the pumping device a part of the heated liquid that is pumped through the dispensing conduit will escape through this opening and flow through the bypass line back into the hot liquid tank. Even though this part of the heated liquid is not wasted, the flow volume of the heated liquid that is transferred along the dispensing conduit towards the dispensing unit is reduced. In order to reduce the amount of heated liquid that is branched off of the dispensing conduit, it is considered a favorable aspect of the invention that a flow diameter of the bypass line is smaller than a flow diameter of the dispensing conduit at the pressure side of the pumping device. Thus, the fraction of the heated liquid that is pumped by the pumping device but returned into the hot liquid tank and thus does not reach the dispensing unit can be reduced within any further constructive efforts.

For many applications it is considered favorable that the flow diameter of the bypass line is less than half of the flow diameter of the dispensing conduit. Preferably, the flow diameter of the bypass line is less than a third or even less than a quarter of the flow diameter of the dispensing conduit. Since the flow volume depends on the square of the flow diameter, a smaller flow diameter of the bypass line results in a much smaller flow volume that branches off of the dispensing conduit and that flows through the bypass line back into the hot liquid tank.

According to a further embodiment of the invention, the bypass line comprises a backflow preventer that prevents any flow of liquid from the bypass branch towards an open end of the bypass line that opens into the hot liquid tank. By arranging a backflow preventer into the bypass line in such a manner that any flow of liquid towards the open end of the bypass line is prevented, this will prevent any branching off of heated liquid from the dispensing conduit during operation of the pumping device, resulting in the full flow volume that is pumped through the dispensing conduit is transferred to the dispensing unit. The backflow preventer prevents any return of heated liquid from the dispensing unit through the bypass line back into the hot liquid tank. However, the backflow preventer does not interfere with the pressure balancing that is enabled by the opening within the dispensing conduit, as any return flow of heated liquid within the dispensing conduit back to the pumping device is not prevented by the backflow preventer within the bypass line.

According to a favorable aspect of the invention, the pumping device comprises a rotary pump. A rotary pump enables a reliable and efficient pumping of a liquid along the dispensing conduit. The pressure gradient created by a rotary pump is sufficient for many applications and implementations of such a device e.g. within a household or such. Usually, when the rotary pump is not operated and does not pump liquid from the hot liquid tank towards the dispensing unit, any liquid can freely flow through the rotary pump. This allows for a very quick and efficient pressure balancing of the liquid columns at the pressure side and at the intake side, which significantly removes any residual gas within the dispensing conduit and within or near the rotary pump.

The invention also relates to a method for operating such a device for storing and dispensing a heated liquid, the device comprising an unpressurized hot liquid tank with a compensation opening through which pressure balancing with the environment is enabled, the device further comprising a dispensing conduit that runs from the hot liquid tank towards a dispensing unit, the device also comprising a pumping device for conveying the heated liquid from the hot liquid tank through the dispensing conduit towards the dispensing unit, and the dispensing conduit comprising a backflow preventer that is arranged along the dispensing conduit at a pressure side of the pumping device and at distance to the pumping device, whereby the backflow preventer prevents any liquid to flow backwards through the dispensing conduit towards the pumping device while the pumping device is not operated to convey heated liquid towards the dispensing unit.

Usually, heating of the liquid as well as any movement of the heated liquid and in particular pumping the heated liquid creates gas bubbles and residual gas within the heated liquid during operation of such a device. The unwanted accumulation of such gas bubbles and residual gas may adversely affect the operation of the device and in particular may interfere with subsequent operations of the pumping device.

Accordingly, there is also a need for a method for operating such a device that will reduce any adverse effects caused by gas bubbles and residual gas within the heated liquid.

According to a favorable aspect of the invention, after each termination of the operation of the pumping device a pressure balance between the pressure side and an intake side of the dispensing conduit is established, resulting in a flow of heated liquid at the pressure side of the dispensing conduit backwards towards the pumping device. Establishing a pressure balance within the dispensing conduit at both sides of the pumping device causes some heated liquid to flow through the dispensing conduit. If a pumping device is used that allows for a throughflow of liquid while the pumping device is not operated, like e.g. a rotary pump, the heated liquid also flows through the pumping device. It has been found that such a flowing movement of heated liquid within the dispensing conduit and preferably through the pumping device reduces the accumulation of gas bubbles and residual gas within the dispensing conduit and within the pumping device, which enhances the efficiency and user-friendliness of the operation of the device.

According to another aspect of the invention, the pressure balance is established by a bypass line that branches off from the dispensing conduit and opens into an upper region within an interior of the hot liquid tank that is not filled with heated liquid, whereby the pressure in this upper region is the same as in the surrounding area.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 schematically illustrates a device for storing and dispensing a heated liquid with a hot liquid tank and with a dispensing conduit that runs from the hot liquid tank towards a dispensing unit, whereby a bypass branches off the dispensing conduit outside of the hot liquid tank and runs into the hot liquid tank,
Figure 2 schematically illustrates another embodiment of the device, whereby a section of the dispensing conduit runs through the hot liquid tank,
Figure 3 schematically illustrates yet another embodiment of the device, whereby the bypass branch is located within the hot liquid tank, and
Figure 4 schematically illustrates yet another embodiment of the device, whereby the bypass line comprises a backflow preventer that prevents any liquid to flow towards the open end of the bypass line.

All Figures schematically illustrate a device 1 for storing and dispensing a heated liquid with a hot liquid tank 2 and with a dispensing conduit 3 that runs from the hot liquid tank 2 towards a dispensing unit 4 that enables a user to operate the device 1 and to dispense some heated liquid through a dispensing outlet 5 and possibly into a container 6 like e.g. a cup or a glass or a bottle. The hot liquid tank 2 is an unpressurized hot liquid tank 2 that comprises a compensation opening 7 which provides for a fluidic connection of an interior 8 of the hot liquid tank 2 with the environment, resulting in a continuously maintained pressure balance of equal pressure between the interior 8 and the environment. A heating element 9 is arranged within the interior 8 of the hot liquid tank 2 and can be operated to heat a liquid 10 that has been filled into the interior of the hot liquid tank 2.

Along the dispensing conduit 3 and usually below the hot liquid tank 2 there is a pumping device 11. During operation of the pumping device 11, heated liquid 10 from the hot liquid tank 2 is pumped through an intake side 12 of the dispensing conduit 3, through the pumping device 11 and through a pressure side 13 of the dispensing conduit 3 towards the dispensing unit 4. The pumping device 11 is preferably a rotary pump, but may be any other pump. The dispensing conduit 3 may run through the pumping device 11 or pass along the pumping device 11 with the pumping device 11 being operatively connected to the dispensing conduit 3, like e.g. a peristaltic pump that is operatively connected to a flexible section of the dispensing conduit 3.

A backflow preventer 14 is arranged along the pressure side 13 of the dispensing conduit 3. The backflow preventer 14 prevents any liquid to flow backwards through the pressure side 13 of the dispensing conduit 3 towards the pumping device 11 or back into the hot liquid tank 2. External liquid that will be prevented to flow backwards in the direction of the hot liquid tank 2 can be e.g. cold water that is also fed to the dispensing unit 4 by a cold liquid conduit 15. The arrangement of the backflow preventer 14 provides additional safety during use or non-use of the device 1. However, the backflow preventer 14 also prevents any return of heated liquid 10 back into the hot liquid tank 2 that was previously pumped by the pumping device 11 from the hot liquid tank 2 towards the dispensing unit 4 but has not yet been dispensed through the dispensing outlet 5 of the dispensing unit 4.

Operation of the heating element 9 or of the pumping device 11 usually results in an unwanted accumulation of gas bubbles and residual gas within the heated liquid 10. Such residual gas affects the operation of the device 1 and usually interferes with a reliable and efficient operation of the pumping device 11. It has been found that by providing for a pressure balance between the pressure side 13 and the intake side 12 of the dispensing conduit 3, the volume of residual gas within the dispensing conduit 3 is significantly reduced after termination of the operation of the pumping device 11. In order to allow for such pressure balance, there is a bypass line 16 that branches off at a bypass branch 17 from the dispensing conduit 3, that runs into the interior 8 of the hot liquid tank 2, and that opens into an upper region 18 within the interior 8 of the hot liquid tank 2 that is not filled by the heated liquid 10 that is stored and heated within the interior 8 of the hot liquid tank 2. Due to the hot liquid tank 2 being an unpressurized hot liquid tank 2 and the compensation opening 7 of the hot liquid tank 2, both the pressure side 13 via the bypass line 16 and the intake side 12 of the dispensing conduit 3 open into the upper region 18 within the interior 8 that is at equal pressure with the environment. Thus, the bypass line 16 enables a pressure balance within the dispensing conduit 3 that results in a backflow of heated liquid 10 towards the hot liquid tank 2 after termination of any operation of the pumping device 11, which reduces the amount of residual gas that remains trapped within the dispensing conduit 3 and that might interfere with the operation of the device 1 and in particular with the operation of the pumping device 11.

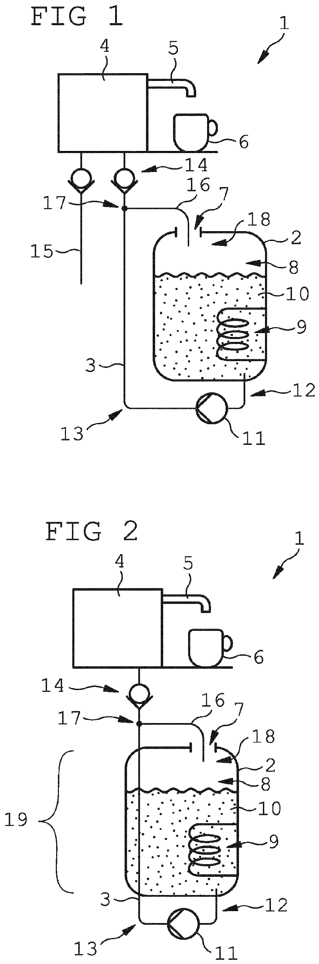

Figures 1 to 4 schematically illustrated different arrangements of the dispensing conduit 3 and of the bypass line 16 that branches off of the dispensing conduit 3. In all embodiments of the device 1 that are illustrated within the figures 1 to 4, the dispensing unit 4 is arranged above the hot liquid tank 2 and the pumping device 11 is arranged below the hot liquid tank 2. The backflow preventer 14 is located near the dispensing unit 4 and above the hot liquid tank 2. However, the device 1 may have any other suitable design or any other arrangement of some or of all components of the device 1.

In the exemplary embodiment that is illustrated in Figure 1, the dispensing conduit 3 runs along the full length of the dispensing conduit 3 outside of the hot liquid tank 2. The bypass branch 17 is located outside and above of the hot liquid tank 2. The bypass line 16 runs through the compensation opening 7 of the hot liquid tank 2 into the interior 8 of the hot liquid tank 2 and opens into the upper region 18 within the interior 8 of the hot liquid tank 2 that is not filled with heated liquid 10 during normal operation of the device 1.

Figure 2 illustrates another embodiment of the device 1, whereby a section 19 of the pressure side 13 of the dispensing conduit 3 runs through the interior 8 of the hot liquid tank 2. Thus, this section 19 will also be heated by the heating element 9. However, the bypass branch 17 is located outside of the hot liquid tank 2 and the bypass line 16 runs similarly to the bypass line 16 of the embodiment of Figure 1. Both embodiments of Figure 1 and Figure 2 allow for easy manufacture and cost-effective retrofitting of the bypass line 16.

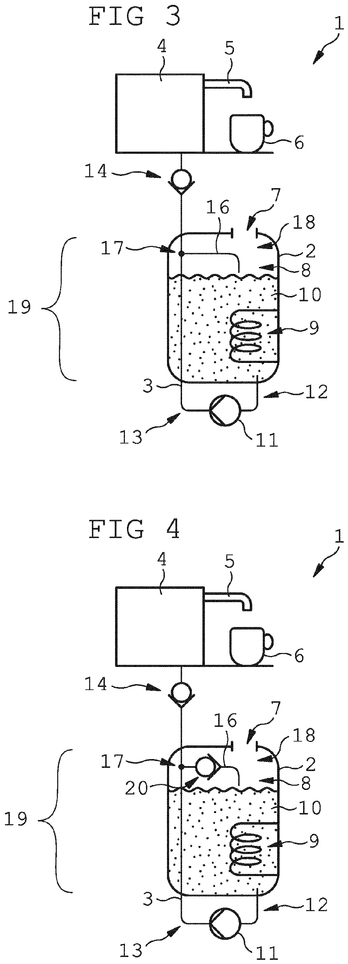

Figure 3 illustrates yet another embodiment of the device 1 with the bypass branch 17 arranged inside of the interior 8 of the hot liquid tank 2. Such a design results in a very safe and reliable operation of the device 1, as the bypass line 16 is arranged fully inside of the hot liquid tank 2 which prevents any unwanted leakage of heated liquid 10 along the bypass line 16 and in particular at the bypass branch 17.

Within yet another embodiment that is shown in Figure 4, the bypass line 16 comprises a backflow preventer 20 that is installed into the bypass line 16 in such a manner that the backflow preventer 20 prevents any flow of liquid from the bypass branch 17 towards the upper region 18 within the interior 8 of the hot liquid tank 2. During operation of the pumping device 11 heated liquid 10 is pumped along the pressure side 13 of the dispensing conduit 3, but will not branch off into the bypass line 16 that is blocked by the backflow preventer 20. Thus, the full flow volume of heated liquid 10 that is pumped by the pumping device 11 along the dispensing conduit 3 will reach the dispensing unit 4 and is available for being dispensed via the dispensing outlet 5.

## Claims

1. Device (1) for storing and dispensing a heated liquid (10) comprising an unpressurized hot liquid tank (2), whereby the hot liquid tank (2) comprises a heating element (9) for heating the liquid that is stored within the hot liquid tank (2), and whereby the hot liquid tank (2) further comprises a compensation opening (7) through which pressure balancing with the environment is enabled, the device (1) further comprising a dispensing conduit (3) that runs from the hot liquid tank (2) towards a dispensing unit (4), the device (1) also comprising a pumping device (11) for conveying the heated liquid (10) from the hot liquid tank (2) through the dispensing conduit (3) towards the dispensing unit (4), and the dispensing conduit (3) comprising a backflow preventer (14) that is arranged along the dispensing conduit (3) at a pressure side (13) of the pumping device (11) and at distance to the pumping device (11), whereby the backflow preventer (14) prevents any liquid to flow backwards through the dispensing conduit (3) towards the pumping device (11) while the pumping device (11) is not operated to convey heated liquid (10) towards the dispensing unit (4), **characterized in that** the device (1) also comprises a bypass line (16) that branches off from the dispensing conduit (3) at the pressure side (13) of the pumping device (11) and that opens into an upper region (18) within the hot liquid tank (2) that is not filled with the liquid (10), thereby providing an opening of the dispensing conduit (3) through which pressure balancing with the environment is enabled, which allows for a pressure balancing of the liquid column at the pressure side (13) of the pumping device (11) with the liquid column at the intake side (12) of the pumping device (11) after operation of the pumping device (11) is stopped.

2. Device (1) according to claim 1, **characterized in that** a bypass branch (17) is located outside of the hot liquid tank (2) and above a top of the hot liquid tank (2).

3. Device (1) according to claim 2, **characterized in that** the bypass line (16) runs through the compensation opening (7) of the hot water tank (2).

4. Device (1) according to one of the preceding claims, **characterized in that** a section (19) of the dispensing conduit (3) at the pressure side (13) of the pumping device (11) runs through the hot liquid tank (2), and that the bypass branch (17) is located inside of the hot liquid tank (2) and near a top of the hot liquid tank (2).

5. Device (1) according to one of the preceding claims, **characterized in that** a flow diameter of the bypass line (16) is smaller than a flow diameter of the dispensing conduit (3) at the pressure side (13) of the pumping device (11).

6. Device (1) according to one of the preceding claims, **characterized in that** the bypass line (16) comprises a backflow preventer (20) that prevents any flow of liquid (10) from the bypass branch (17) towards an open end of the bypass line (16) that opens into the hot liquid tank (2).

7. Device (1) according to one of the preceding claims, **characterized in that** the pumping device (11) comprises a rotary pump.

8. Method for operating a device (1) for storing and dispensing a heated liquid (10), the device (1) comprising an unpressurized hot liquid tank (2) with a compensation opening (7) through which pressure balancing with the environment is enabled, the device (1) further comprising a dispensing conduit (3) that runs from the hot liquid tank (2) towards a dispensing unit (4), the device (1) also comprising a pumping device (11) for conveying the heated liquid (10) from the hot liquid tank (2) through the dispensing conduit (3) towards the dispensing unit (4), and the dispensing conduit (3) comprising a backflow preventer (14) that is arranged along the dispensing conduit (3) at a pressure side (13) of the pumping device (11) and at distance to the pumping device (11), whereby the backflow preventer (14) prevents any liquid to flow backwards through the dispensing conduit (3) towards the pumping device (11) while the pumping device (11) is not operated to convey heated liquid (10) towards the dispensing unit (4), **characterized in that** after each termination of the operation of the pumping device (11) a pressure balance between the pressure side (13) and an intake side (12) of the dispensing conduit (3) is established, resulting in a flow of heated liquid (10) at the pressure side (13) of the dispensing conduit (3) backwards towards the pumping device (11) .

9. Method according to claim 8, **characterized in that** the pressure balance is established by a bypass line (16) that branches off from the dispensing conduit (3) and opens into an upper region (18) within an interior (8) of the hot liquid tank (2) that is not filled with heated liquid (10), whereby the pressure in this upper region (18) is the same as in the surrounding area.
